# EUROPEAN PATENT APPLICATION

(11) **EP 3 828 754 A1**
(43) Date of publication of application: **02.06.2021**
(21) Application number: 19212040.0
(22) Date of filing: 28.11.2019
(51) Int. Cl.: G06K 9/00

(54) **COMPUTER-IMPLEMENTED VIDEO ANALYSIS METHOD GENERATING USER VIEWING PREDICTION DATA FOR A VIDEO**

(71) Applicant: Plaiground ApS, 2100 København Ø (DK)
(72) Inventor: PETERSSON, Jon Voetmann, 2100 København Ø (DK); DEICHMANN-BENDIXEN, Caroline, 2100 København Ø (DK); JØRGENSEN, Henning Martin, 2100 København Ø (DK); RASMUSSEN, Jesper, 2100 København Ø (DK)
(74) Representative: Guardian IP Consulting I/S

(57) **Abstract**

This invention relates to a computer-implemented method (200) performing video-analysis to generate user viewing prediction data (105) for a predetermined video (101), where the method comprises the steps of: obtaining a set of image data (102) for each of a plurality of frames (102) of the predetermined video (101), obtaining image movement or difference data (103), e.g. optical flow data (103), between consecutive or subsequent sets of image data (102) of the predetermined video (101), generating viewing prediction data (105) for at least one set of obtained image data (102), the viewing prediction data (105) of a particular set of image data (102) representing an estimated likelihood, for a number of points or a number of parts of the particular set of image data (105), of users viewing a respective point or part, where the step of generating viewing prediction data (105) for a particular set of image data (102) comprises providing the particular set of image data (102) and image movement or difference data (103) associated with the particular set of image data (102) to a computer program or routine implementing a trained artificial intelligence or machine learning method or component (104) to generate or output the viewing prediction data (105), wherein the computer program or routine implementing the trained artificial intelligence or machine learning method or component (104) has been trained as disclosed herein.

## Description

### Field of the invention

The present invention relates generally to a computer-implemented video analysis method. More particularly, the present invention relates to a computer-implemented method performing video-analysis to generate user viewing prediction data for a predetermined video.

### Background

Eye-tracking, gaze-tracking, and similar systems are generally well-known systems most commonly used to determine where a particular user actually is looking. The eye-tracking, gaze-tracking, etc. (forth referred to only as eye-tracking) systems typically measure or otherwise determine where the eye(s) of a user is looking in relation to a predetermined frame of reference that depends on the type of system. The user may for example be looking at an image or a video being displayed on a screen (being simpler with respect to a frame of reference) or be looking at objects in a 3D space (a bit more complicated with respect to a frame of reference). Eye tracking data is typically obtained in real-time or near real time over a period of time, obviously for viewing a video but also sometimes when looking at a still image to determine how a user actually looks at the video or image over time.

Some uses of eye-tracking technology e.g. involve presenting a target stimulus to one or a number of users while an eye-tracking device is used to record the activity of the eye(s) of respective users. Examples of target stimuli may e.g. include adverts, websites, television programs, sporting events, films and commercials, packaging, finished or prototype products, consumer systems (e.g. ATMs, checkout systems, user interfaces), etc.

Common for all or at least many eye-tracking systems is that they require dedicated hardware that are relatively expensive, especially for more professional use, and furthermore that setup and use are not so straight forward, e.g. with some systems requiring that the user holds his/her head still or relatively still (e.g. for frame of reference purposes) during eye tracking measurements.

In addition to requiring specialised hardware, it is relatively time consuming to obtain the eye-tracking data, in particular if used in connection with a video, since a user has to actually view the entire video in real-time while eye-tracking data is obtained. This is even more so, when eye-tracking data is to be obtained from several users to get representable data in general. This may e.g. be the case if something useful is to be obtained of how users in general are watching a particular video since enough data, e.g. across suitable demographics, needs to be obtained to provide a statistically sufficient basis. If a video is five minutes long and data from 200 - 500 people (or even more) are needed or wished, then the combined direct time usage for obtaining eye-tracking data is about 17 - 42 hours (or even more), excluding setup, instructions, post-processing, data analysis, etc.

Within advertising it is not unusual to produce a video commercial and hire a professional analysis team/provider to perform an analysis often only involving screening the video to a (hopefully carefully selected) demographically representative audience and interviewing them and/or asking them to fill-out a questionnaire afterwards and then providing an analysis based on the received input. Such a service is expensive and time-consuming - often taking 2 - 3 weeks or more. The delivery time (and the expenses) makes it practically unfeasible to use for smaller and/or projects with short production/delivery time. The issues exist particularly in the online advertising environment as bigger companies or brands e.g. may have hundreds (sometimes even two or three hundred) media or video assets (ranging from simpler website adverts in various forms (e.g. still or animated images and/or smaller commercials) to big budget commercials) to go live on various platforms pr. month. Additionally, for important projects it is not uncommon to produce a number of, e.g. three, different versions of a commercial and then showing each to the same or more often different audiences and analyse the feedback (e.g. questionnaire and/or interview data) to support a decision of which version of the commercial to use.

Patent application US 2013/0097011 discloses an advertisement perception predictor that may forecast an effectiveness of an online advertisement in a web page by predicting whether the online advertisement is perceived by a user or not. The advertisement perception predictor may use a perception model that is trained to determine perception probability values of online advertisements. A perception probability may be derived depending on whether a user is likely to view an online advertisement or not, i.e. a probability of yes (viewing) or no (not viewing) the online advertisement. Features for modelling perception probability are mostly web page specific and are mentioned (see e.g. Table 1) to e.g. be display screen-based features (e.g. key regions of a web page displayed on a screen where a user is more likely to place more attention), browsing behaviour features (e.g. closeness to selected hyperlink and stay time on a web page), visual features (e.g. flashing content around the advertisement), web page functionality (e.g. advertisement close to title, advertisement in main content region, and advertisement in a right navigation bar), brand recognition features, etc.

Patent specification US 10,080,042 discloses prediction of user engagement (such as 'boring' or 'interesting') in unwatched videos by collecting and aggregating data describing user engagement in watched videos.

Patent specification US 9,465,435 discloses segmentation of a video based on user engagement using actions of users (such as fast-forwarding past parts of a video, rewinding to interesting parts, re-watching parts, sharing links to parts of the video, etc.) indicative of user interest.

It would be an advantage to be able to provide reliable viewing prediction data for parts (i.e. frames) of a video and for the video as a whole. It would also be an advantage to provide such using only video analysis of the video (or frames therefrom). Finally, it would be an advantage to provide such viewing prediction data in a computationally efficient and/or relatively fast way.

### Summary

It is an object to provide a computer-implemented method performing video-analysis to generate or generating user viewing prediction data for a predetermined video alleviating one or more of the above mentioned drawbacks at least to an extent.

According to a first aspect, this is achieved, at least to an extent, by a computer-implemented method (of) performing video-analysis to generate user viewing prediction data for a predetermined video, where the method comprises the step of obtaining or providing a set of image data for each of a plurality of frames of the predetermined video. A set of image data represents or corresponds to a frame of the predetermined video and are also designated as a processing frame herein. A set of image data may e.g. be obtained for at least two, some, or all of the frames of the predetermined video. The respective sets of image data/the frames may e.g. be automatically extracted from the predetermined video or be provided in another suitable way. The method further comprises a step of obtaining or providing image movement or difference data between consecutive or subsequent sets of image data of the predetermined video, i.e. the relative motion of pixels or groups of pixel between two consecutive/subsequent images is obtained or provided. The image movement or difference data represent the change from picture to picture and may e.g. be obtained for the full image data (i.e. movement/difference picture to picture) or alternatively for only a portion of the image data e.g. by tracking (and e.g. determining) objects and obtaining only image movement or difference data for or near these e.g. using a bounding shape or similar. The image movement or difference data may e.g. be optical flow data.

The method further comprises generating viewing prediction data for at least one (e.g. one, two, some, or all) set of obtained image data. The viewing prediction data for a particular set of obtained image data represents or indicates an estimated likelihood, for a number of points (e.g. for each or some pixels) or a number of parts (e.g. for each or some clusters or groupings of pixels) of the particular set of image data, of users viewing a respective point or part (of the image or frame of the predetermined video as represented by the particular set of image data). The viewing prediction data is or comprises, at least in some embodiments, one or more statistical quantities of where users in general (or at least according to a trained artificial intelligence or machine learning method or component; see in the following) are likely to look when looking at the particular set of obtained image data and accordingly provides a prediction or estimate thereof. In at least some embodiments, the viewing prediction data is or comprises a statistical quantity, e.g. a percentage or corresponding, for each pixel of the particular set of obtained image data.

The step of generating viewing prediction data for a particular set of image data comprises providing the particular set of image data and image movement or difference data associated with (i.e. generated for or on the basis of) the particular set of image data to a computer program or routine implementing a trained artificial intelligence or machine learning method or component configured to generate and/or output the viewing prediction data, where the computer program or routine implementing the trained artificial intelligence or machine learning method or component has been trained by or on a plurality of input images extracted from a plurality of input videos (typically several but at least two input images are extracted from one input video), a plurality of input image movement or difference data sets (e.g. optical flow data), each obtained for at least two consecutive or subsequent input images of the plurality of input images, and a plurality of sets of eye-tracking data, each sets of eye-tracking data being associated with (i.e. generated for or on the basis of) one of the plurality of input images. The eye-tracking data for a particular input image are data preferably obtained by physically measuring or estimating (by a suitable eye-tracking device or system) where one or more users actually are looking at the particular input image (of an input video) and is associated with this. A particular set of input image movement or difference data is for a particular input image that has been used to generate the particular set of input image movement or difference data (together with one or more time-wise previous and/or time-wise subsequent images of a same video). In other words, an input image, (a set of) input image movement or difference data for the input image, and (a set of) eye-tracking data for the input image is used in training, and several of such data sets are used for one video and this is done for a plurality, e.g. several, videos. It is noted, that eye-tracking data for several users may, and preferably is, used for a single input image. In at least some embodiments, the computer program or routine implementing the trained artificial intelligence or machine learning method or component has been trained using an input image and an associated image movement or difference data set as input with eye tracking data (obtained for the used input image) used as a ground truth or similar. In at least some embodiments, the step of generating viewing prediction data for a particular set of image data comprises feature extraction, e.g. or in particular (e.g. also) including low-level features such edges, contrast, colour, lighting, etc. In some further embodiments, the feature extraction is done (at least initially or at least partly) separately on the provided particular set of image data and on the provided image movement or difference data associated with the particular set of image data. This has been seen to greatly enhance the quality and accordingly provide more accurate viewing prediction data.

In some embodiments, the artificial intelligence or machine learning method or component is or comprises an artificial neural network (ANN). In some preferred embodiments, the artificial intelligence or machine learning method or component is or comprises a deep neural network (DNN). In some further preferred embodiments, the artificial intelligence or machine learning method or component is or comprises a convolutional neural network (CNN) (i.e. the DNN is a CNN), e.g. a VGG 16 or a VGG 19 network.

Alternatively, the artificial intelligence or machine learning method or component is or comprises a supervised learning model e.g. a support machine (SVM) or other suitable deep learning method or component. The artificial intelligence or machine learning method or component may be supervised, semi-supervised, or unsupervised.

In this way, a reliable, robust, and accurate viewing prediction data is provided, in particular because the computer program or routine implementing the trained artificial intelligence or machine learning method or component has been trained on a combination of both input images and input image movement or difference data (and using both these as input when generating viewing prediction data). Training with input images (extracted from a video) ensures that the trained artificial intelligence or machine learning method or component becomes capable of (and better at) reliably recognising salient features of an image, i.e. features that 'naturally' attract the attention of a user, and thereby increases the accuracy of predicting or estimating where a user will look due to such features. Such salient features may e.g. be parts of the image with contrast, eyes, faces, people, objects, parts of the image due to composition, etc. Training with image movement or difference data, e.g. optical flow data, ensures that the trained artificial intelligence or machine learning method or component becomes capable of (and better at) reliably recognising movement in an image (obtained relative to another image belonging to a same video) and thereby also increases the accuracy of predicting or estimating where a user will look. In some embodiments, a large number of frames, e.g. some, most, or all, of an entire video is extracted and processed and has viewing prediction data derived for each frame.

In particular, combining the two types (salient features and movement) provides reliable, robust, and/or more accurate viewing prediction data. The video analysis method as disclosed herein generating viewing prediction data may also be seen as classifying the digital image(s) (and thereby the video that the digital image(s) are extracted from) or more particularly classifying respective parts of the digital image(s), e.g. individual pixels or groupings of pixels, according to the viewing prediction data/statistical quantities.

The generated viewing prediction data may be used to reliably estimate or predict where users in general are likely to look at images of a video. This has many uses and may e.g. be used within advertising, e.g. to quickly test whether users in general or within a specific demographic are predicted to look at relevant parts or messages of a commercial or to test between different versions of a commercial. Alternatively, it may be used to estimate or predict how users in general look at a website (e.g. just by obtaining a video of a webpage, e.g. while scrolling the webpage). Another use is e.g. to analyse a video filmed from a driver's perspective in a moving vehicle while the vehicle is driven so road signs, traffic lights, etc. also are filmed. By performing video analysis as disclosed herein, it is possible to estimate or predict whether for example a road sign is generally or adequately observed or not (and for some embodiments to what extent), which may be used for planning and testing of road signage, transport related communication, safety, etc. Such videos may e.g. be filmed for different speeds of the vehicle. It may e.g. also be used within the consumer product retail industry e.g. by filming a shelf, display, etc. or filming walking down an aisle in a super market and analysing the resulting video to predict or estimate where users in general will look and what they thereby are likely to observe or notice. A further use is e.g. to film interiors of a car (e.g. the dashboard, car display, controls, etc. from the driver's perspective) and analyse the movie. Generally, all relevant uses of estimating or predicting general user attention can be envisaged as long as a video can be obtained.

In some embodiments, the image movement or difference data is optical flow data. This provides a computationally expedient form of usable image data and image movement or difference data. The optical flow data may be derived in any suitable way. A preferred way is e.g. to derive the optical flow data for two (consecutive or subsequent) sets of image data of the predetermined video using polynomial expansion e.g. as disclosed according to "Two-Frame Motion Estimation Based on Polynomial Expansion", Gunnar Farneback incorporated herein by reference and e.g. available here http://www.diva-portal.org/smash/get/diva2:273847/FULLTEXT01.pdf. Accordingly, a first step is approximating a number of neighbourhoods (e.g. neighbourhoods of each or at least some pixels) of each set of image data by, e.g. quadratic, polynomials. This may e.g. efficiently be done using a polynomial expansion transformation. Subsequently, displacement fields are estimated from polynomial expansion coefficients.

In some embodiments, a resolution of the sets of image data is smaller than a resolution of the frames of the predetermined video. This reduces processing time and processing effort/power usage and can still generate fully usable results. For example, the resolution of the predetermined video may e.g. be 1280x720, 1920x1080, or 3840x2180 pixels, while the resolution of the sets of image data (extracted frames) e.g. is 640x480 pixels. This has been seen to still provide usable results of a high quality with fairly reduced computational effort, etc.

In some embodiments, the image movement or difference is obtained in, converted into, or encoded in a predetermined image format. Processing is simplified by also having the image movement or difference data in an image format as only one type of input data is to be processed by the computer-implemented video analysis method disclosed herein.

In some embodiments, the image movement or difference data (e.g. the optical flow data) is derived by encoding a length value and an angle value for at least some points (e.g. pixels) or parts (e.g. groups of pixels) of a set of image data as image data according to a predetermined image format. In this way, an expedient encoding of the image movement or difference data is provided. In some further embodiments, the image movement or difference data is encoded as an HSV image format with a length value being encoded as a hue value and an angle value being encoded as a saturation value (where V/value of the HSV image format is not used and e.g. set to a same consistent value for all optical flow data sets), or alternatively the other way around (angle -> H; length -> S).

In some embodiments, a resolution and/or a data format of the sets of image data is the same, respectively, as a resolution and/or a data format of the sets of image movement or difference data. It is a computational advantage, if the resolution and/or image format of the sets of image movement or difference data is the same as the resolution and/or image format of the obtained sets of image data. If the data format of the image movement or difference data is in an HSV image format, the HSV image format is, at least in some embodiments, converted from HSV into the same image format, e.g. an RBG format, as the obtained image data sets before being used as input.

In some embodiments, only a portion of a number of frames of the predetermined video is extracted as a respective set of image data, i.e. only a subset of the overall frames of the predetermined video are extracted as respective sets of image data for processing. This reduces processing time and processing effort/power usage and can still generate fully usable end results. For example, it may e.g. be only every second, third, fourth, or in general every N'th frame of the predetermined video that are extracted as respective sets of image data for processing.

In some embodiments, the method further comprises a step of performing computer-implemented object detection (also referred to as object determination or object recognition) on/for the particular set of image data to identify at least one portion of the particular image data set where each portion with a certain predetermined likelihood comprises or represents an object (different portions may and typically will comprise or represent different objects). In some further embodiments, the method further comprises a step of determining whether generated viewing prediction data within a bounding shape of a detected object is above a predetermined threshold or level or not, and deriving a metric in response thereto e.g. as disclosed herein.

In some embodiments, the method further comprises one or more of:
- deriving a metric representing a predicted attention for a detected object for a set of image data or each set of image data of the predetermined video,
- deriving a presence metric for a particular detected object representing the time or number of frames that the particular detected object is present in, compared to the overall time or number of frames of the predetermined video, and
- deriving a viewing or attention score or metric for a particular detected object representing or estimating to what extent users are predicted to look at the detected object (by using the generated viewing prediction data) for one or more particular sets of image data and/or for the predetermined video.

In some embodiments, the method further comprises a step of converting the generated viewing prediction data into a heatmap image format, e.g. a colour heatmap image format, and superimposing the heatmap image format with the particular set of image data that the viewing prediction data was generated for. The resulting superimposed colour heatmap images may e.g. be converted into a video or image sequence format for visualisation and/or analysis.

In some embodiments, the computer program or routine implementing the trained artificial intelligence or machine learning method or component has been further trained by audio segments, or data derived therefrom, respectively associated with the input images and/or the input videos, wherein the step of providing the particular set of image data and image movement or difference to a computer program or routine implementing the trained artificial intelligence or machine learning method or component further comprises providing an audio segment, or data derived therefrom, being associated with the particular set of image data. An obtained audio segment could for example contain an audio cue e.g. the sound of a car horn or a car engine running (more) likely prompting user attention to focus on a car or vehicle if contained in the frames of the video. As another example, an obtained stereo or surround sound audio segment could for example also be used as an attention indicator. Audio of videos can be strong attention indicators and using such may generally increase the accuracy of the viewing prediction data. In some further embodiments, the data derived therefrom (i.e. derived from the audio segment) comprises a frequency spectrum and/or another type of audio fingerprinting, e.g. in an image format enabling efficient processing.

In some embodiments, the step of generating viewing prediction data for a particular set of image data comprises
- providing the particular set of image data to a first processing channel or branch of the computer program or routine implementing a trained artificial intelligence or machine learning method or component (e.g. or preferably a convolutional neural network),
- providing the image movement or difference data associated with the particular set of image data to a second processing channel or branch of the computer program or routine implementing a trained artificial intelligence or machine learning method or component, and
- extracting, different or typically different, image features separately in the first and the second processing channel or branch.

In some embodiments, the step of generating viewing prediction data for a particular set of image data further comprises shaping or converting the viewing prediction data for suitable use and e.g. upscales the output, i.e. the generated user viewing prediction data, to a used or desired resolution.

In some embodiments, the step of generating viewing prediction data for a particular set of image data further comprises selectively enhancing certain extracted features thereby increasing the quality of the overall output. In some further embodiments, this is done by an artificial recurrent neural network (RNN), such as a Long short-term memory (LSTM) network.

In some embodiments, the step of generating viewing prediction data for a particular set of image data further comprises extracting, emphasizing, and/or determining selected features according to a human perception model, e.g. a so-called Learned Prior' function, implemented e.g. using a set Gaussian functions with learned (during training) Gaussian parameters as input.

In some embodiments, a number of different artificial intelligence, machine learning, or similar methods or components are used, where each has been differently trained using input (in particular eye tracking data) for a selected demographic profile, i.e. one method/component is trained for a first demographic profile, another method/component is trained for a second demographic profile, etc. This enables generation of viewing prediction data according to different demographic profiles.

According to a second aspect, an electronic data processing system is provided that comprises: one or more processing units connected to an electronic memory, and one or more signal transmitter and receiver communications elements for communicating via a computer network, wherein the one or more processing units are programmed and configured to execute the computer-implemented method according to the first aspect as disclosed herein.

Further details and embodiments are disclosed in the following.

### Definitions

All headings and sub-headings are used herein for convenience only and should not be constructed as limiting the invention in any way.

The use of any and all examples, or exemplary language provided herein, is intended merely to better illuminate the invention and does not pose a limitation on the scope of the invention unless otherwise claimed. No language in the specification should be construed as indicating any non-claimed element as essential to the practice of the invention.

This invention includes all modifications and equivalents of the subject matter recited in the claims appended hereto as permitted by applicable law.

### Brief description of the drawings

Figure 1 schematically illustrates aspects of video analysis as disclosed herein;
Figure 2 schematically illustrates exemplary embodiments of a computer-implemented video-analysis method as disclosed herein;
Figure 3 schematically illustrates exemplary embodiments of determining viewing prediction data as disclosed herein, e.g. as a step of the method according to Figure 2;
Figures 4A - 4F schematically illustrate a number of exemplary image data sets;
Figures 5A - 5E schematically illustrate exemplary image movement or difference data, here in the form of optical flow data, obtained from or for the image data sets of Figures 4A - 4F;
Figures 6A - 6E schematically illustrate generated viewing prediction data derived using, as input, the image data sets and the flow data of Figures 4 and 5, respectively;
Figures 7A - 7E schematically illustrate exemplary image data sets with a visualisation of generated viewing prediction data superimposed thereupon;
Figures 8A - 8E schematically illustrate exemplary image data sets with a visualisation of generated viewing prediction data and object recognition data superimposed thereupon;
Figure 9 schematically illustrates exemplary embodiments of training a method or component of a video analysis method as disclosed herein;
Figure 10 schematically illustrates an obtained exemplary set of eye tracking data and the result of processing it for use in training according to an exemplary embodiment;
Figure 11 schematically illustrates a simplified block flow chart of an embodiment of a computer program or routine implementing a trained artificial intelligence or machine learning method or component as disclosed herein; and
Figure 12 schematically illustrates a functional block diagram of embodiments of an electronic data processing device or system configured to output or generate viewing prediction data and/or implementing various embodiments of the methods as disclosed herein.

### Detailed description

Various aspects and embodiments of a computer-implemented video analysis method and an electronic data processing device or system configured to execute the computer-implemented video analysis method as disclosed herein will now be described with reference to the figures.

The shown figures are schematic representations for which reason the configuration of the different structures as well as their relative dimensions are intended to serve illustrative purposes only.

Some of the different components are only disclosed in relation to a single embodiment of the invention, but is meant to be included in the other embodiments without further explanation.

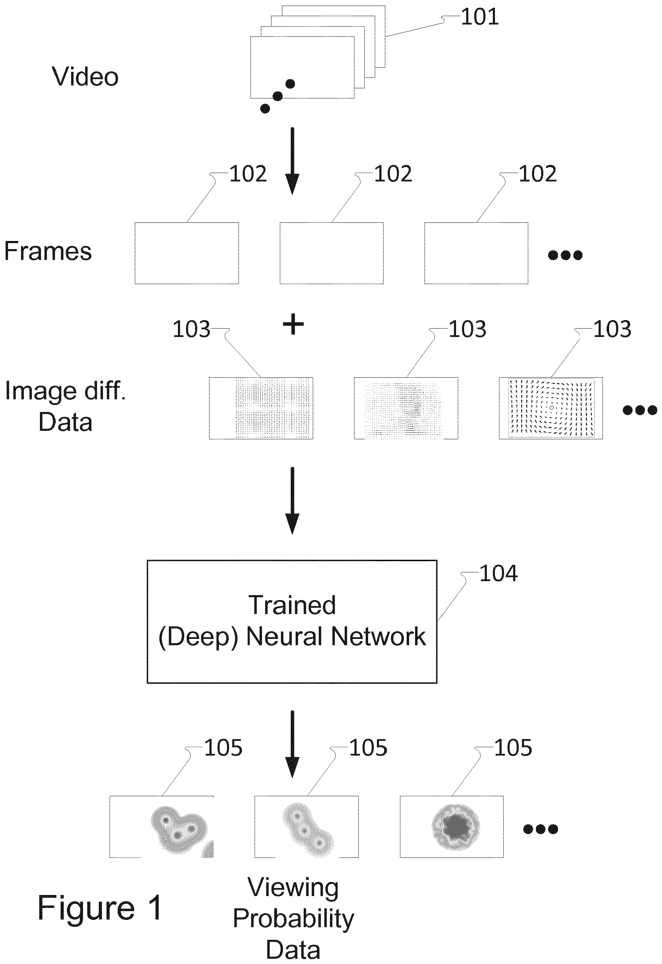

Figure 1 schematically illustrates aspects of video analysis as disclosed herein.

Illustrated is (digital data representing) a video 101 that is to be analysed by a computer-implemented video analysis method or an electronic data processing system executing the computer-implemented video analysis method, both as disclosed herein. The format of the video 101 may be a streaming video format or alternatively a non-streaming video format.

Further illustrated is (digital data representing) a number of processing frames 102, i.e. frames to be processed by the computer-implemented video analysis method/the electronic data processing system executing the same, where the processing frames 102 are extracted from the video 101 in any suitable way as generally known and are to be used for the video analysis. Herein, processing frames are also equally referred to as sets of image data or extracted frames (one set of image data/one extracted frame being one processing frame 102). The specific number of processing frames 102 that are extracted may depend on actual use and/or implementation. In some embodiments, one processing frame 102 is extracted for each (overall) frame of the video 101 that usually would be displayed on a screen to a user when 'normally' viewing the video 101. In other embodiments, only a subset of the overall frames are extracted as processing frames 102, which will reduce processing time and processing effort/power usage and might very well still generate fully usable end results. For example, it may e.g. be only every second, third, fourth, (or any other suitable number) overall frame that are extracted as a processing frame 102. Alternatively or additionally, the extracted processing frames 102 may be up-scaled, up-converted, or extrapolated from the overall frames. It may also be that extracted frames 102 are every overall frame (or are up-scaled, up-converted, or extrapolated) for one or more parts of the video 101 while extracted frames 102 are fewer than overall frames for one or other parts of the video 101. The ratio between overall frames and extracted processing frames 102 does not necessarily need to be the same across the entire video 101. For example, one number of processing frames 102 may be extracted for a first part of the video 101 while another number of processing frames 102 may be extracted for a second part (e.g. having the same length in time/overall frames as the first part). The number of extracted frames for a given segment or part of the video may e.g. depend on characteristics or properties of the video, e.g. extracting a higher number of processing frames 102 for segments or parts of the video involving more frame to frame movement or change than other segments or parts.

In at least some embodiments, the format of the processing frames 102 are a colour image format (i.e. wherefrom it is possible to extract respective R, G, and B colour or corresponding values) although it could be any other suitable format (both lossless and with compression), such as JPEG/JPG, GIF, PNG, HSV (hue saturation value), CMYK, etc. The format of the processing frames 102 does not need to be the same as the format of the video and typically would be different. The format of the video may e.g. be Mp4, H.264, AVI, WMV, etc. The (time-wise) ordering of the extracted frames 102 is the same as that of the video 101.

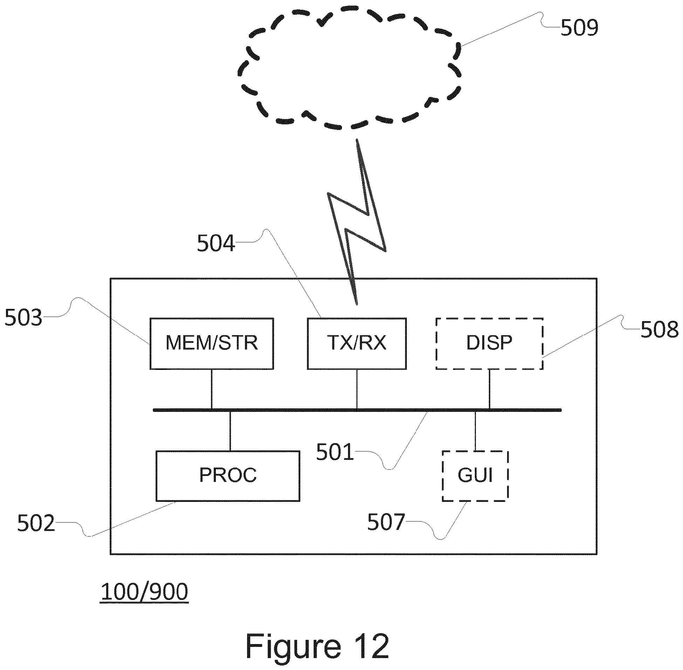

In general, N+1 processing frames 102 are extracted from the video 101 where N is an integer being at least one, where the extracted processing frames 102 may be labelled, designated, ordered, or numbered (depending on convention or definition) as frame₀, frame1, frame₂, ..., frame_{N}. The processing frames 102 may e.g. be extracted by one or more local processing units and/or by external e.g. distributed processing units, e.g. in a cloud computing system; (see e.g. Figure 12). As an alternative to extracting the processing frames 102 they may be provided from another appropriate (external) source (then being associated with the video 101) that already has extracted the processing frames 102. In such cases, there is no need to obtain or transmit the entire video 101. If one processing frame 102 is extracted for each overall frame, the number of frames would correspond to the frame rate in seconds of the video 101 multiplied by its length in seconds.

The resolution of the extracted frames 102 may be the same as the resolution of the video 101. However, in at least some embodiments, the resolution of the extracted frames 102 is reduced compared to the resolution of the video 101, which will reduce processing time and processing effort/power usage.

Further illustrated are (digital data representing) a number of sets or groups of image movement or difference data 103 representing or estimating, as generally known, movement or differences between neighbouring or consecutive processing frames 102. In some embodiments, the image movement or difference data is optical flow data and will be referred to as such. Optical flow data 103 is sometimes also referred to as optic flow data, motion data, motion vectors, flow vectors, image difference data, etc. If there are N+1 processing frames 102 then there generally will be N optical flow data sets (if one set of optical flow data is obtained for each two neighbouring or consecutive processing frames 102). In at least some embodiments (with N+1 processing frames), a first optical flow data set 103 (e.g. labelled 'optical flow₀') is derived from processing frames frame₀ and frame₁, a second optical flow data set 103 (e.g. labelled 'optical flow₁') is derived from processing frames frame₁ and frame₂, etc. until an N'th optical flow data set 103 (e.g. labelled 'optical flow_{N}') is derived from processing frames frame_{N-1} and frame_{N}.

The resolution of each set of optical flow data 103 (typically being the same for all sets of optical flow data) may e.g. correspond directly to the resolution of each processing frame 102 (typically being the same for all processing frames), i.e. a pixel-wise one to one relationship with respect to size. Alternatively, the resolution of each set of optical flow data 103 may be lower than the resolution of each processing frame 102 e.g. by subsampling or similar the processing frames 102 used to derive the optical flow data (sets), which will reduce processing time and processing effort/power usage.

In some embodiments, the optical flow data 103 is determined by obtaining frame-to-frame (or image-to-image) differences e.g. by 'subtracting' a frame from another e.g. as disclosed herein. Alternatively, optical flow data 103 is obtained for only relevant objects of the frames/image e.g. by determining a suitably shaped bounding shape, mask, or form (e.g. a bounding box) or the like for each object and derive the motion of pixels (or blocks of pixels) belonging to the respective objects across frames.

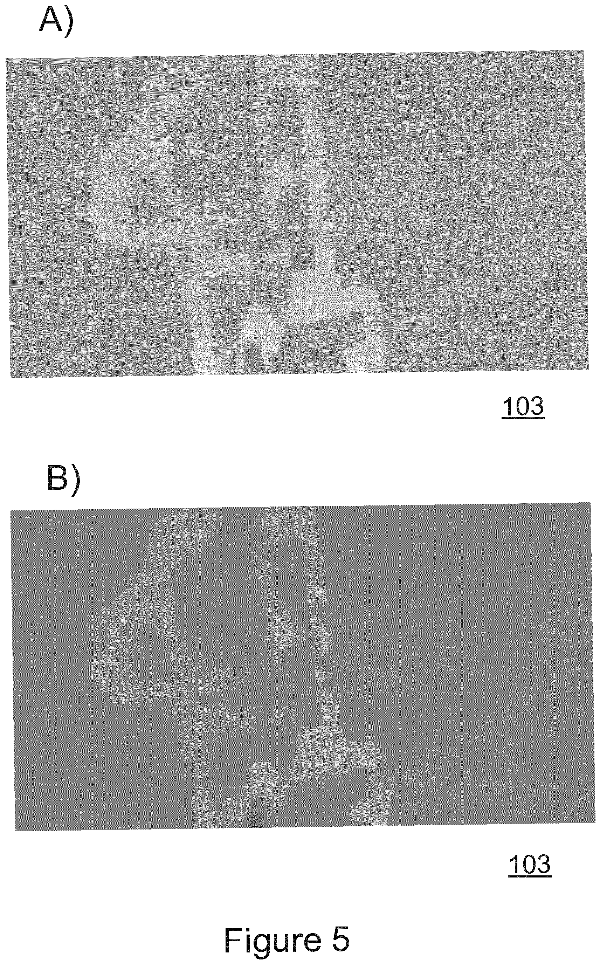

The optical flow data 103 may e.g. comprise data representing a length and an angle (representing a flow vector) for each relevant point (see e.g. Figures 5A - 5E) or in any other suitable way or format. Each relevant point may be a pixel or a block or grouping of pixels.

In Figure 1, the exemplary (sets of) optical flow data 103 are visualised/represented as respective vector fields of flow vectors. Figures 5A - 5E illustrate examples of (sets of) optical flow data 103 visualised or represented as contrast maps or images.

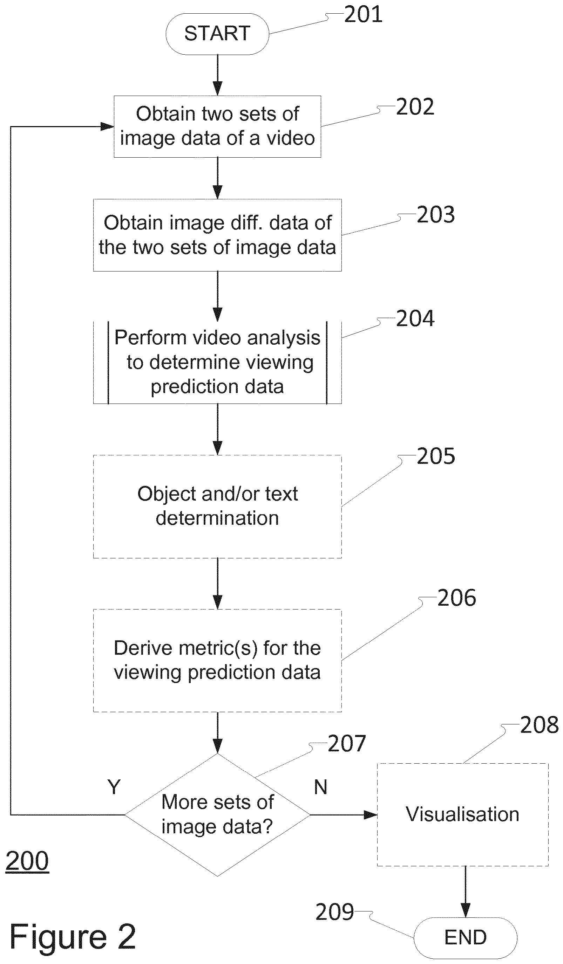

The optical flow data 103 may e.g. be provided (then as being associated with the video 101) from an appropriate source or alternatively it may be generated locally or externally more or less 'on-the-fly' from the video 101. Many suitable optical flow data generation methods exist, including ones being configured and/or optimised for running on one or more GPUs (graphical processing units), etc. and/or in a cloud computing system (see e.g. Figure 12). One particularly expedient optical flow data generation method and embodiments thereof are illustrated and explained in connection with Figure 2.

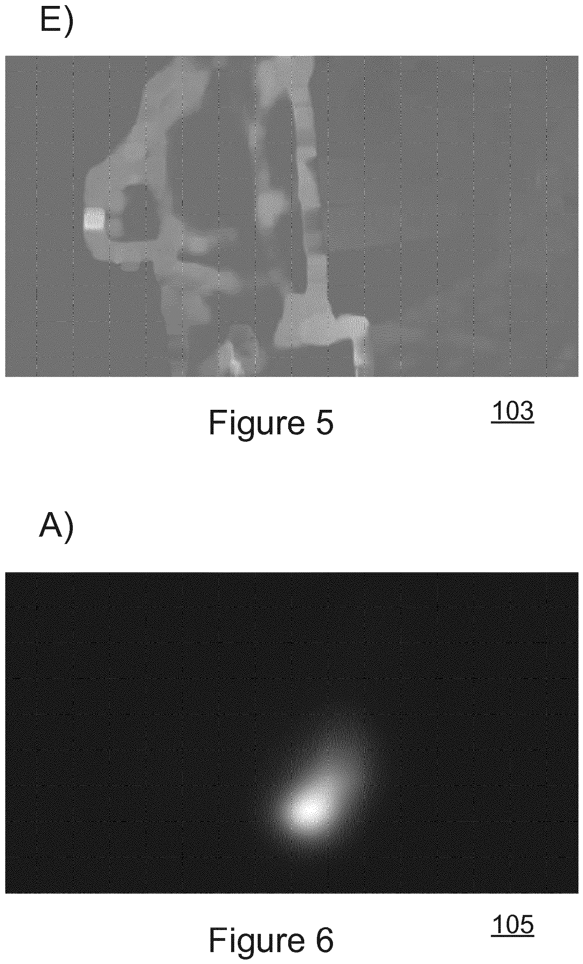

The extracted processing frames 102 and the optical flow data 103 are then used as input to a trained artificial intelligence, machine learning, or similar method or component 104 as disclosed herein to output or generate viewing prediction data 105. In at least some embodiments, one extracted processing frame 102 and one set of optical flow data 103 associated with that particular extracted processing frame 102 is used as input to generate a (set of) digital viewing prediction data 105 for the particular extracted processing frame. In some embodiments, a (set of) viewing prediction data 105 is generated for each (or at least one or some) of the extracted frames 102 using the respective extracted frame 102 and its associated optical flow data 103 as input. Figures 2, 3 and 11 illustrate and describe some embodiments of such a trained artificial intelligence, machine learning, or similar method or component 104. The (set of) viewing prediction data 105 for a particular extracted frame is or comprises, at least in some embodiments, one or more statistical quantities of where users in general (or at least according to the trained artificial intelligence, etc. method or component 104) are likely to look when looking at the particular extracted frame 102 and accordingly provides a prediction or estimate thereof. In at least some embodiments, the viewing prediction data is output directly, or alternatively encoded, in or as an image format where the colour scale or range represent a predicted or estimated likelihood (e.g. between 0 to 100%) of users in general viewing a particular point (e.g. pixel) or part (e.g. group of pixels) of the image. One colour value selected from the colour scale or range is provided for each relevant point or part. The image format may e.g. be a grey-scale image format where (the blackest) black represent the lowest used likelihood (e.g. or often 0%) and (the whitest) white represent the highest used likelihood (e.g. or often 100%). Figures 6A - 6E illustrate examples of viewing prediction data 105 visualised or represented as grey-scale images.

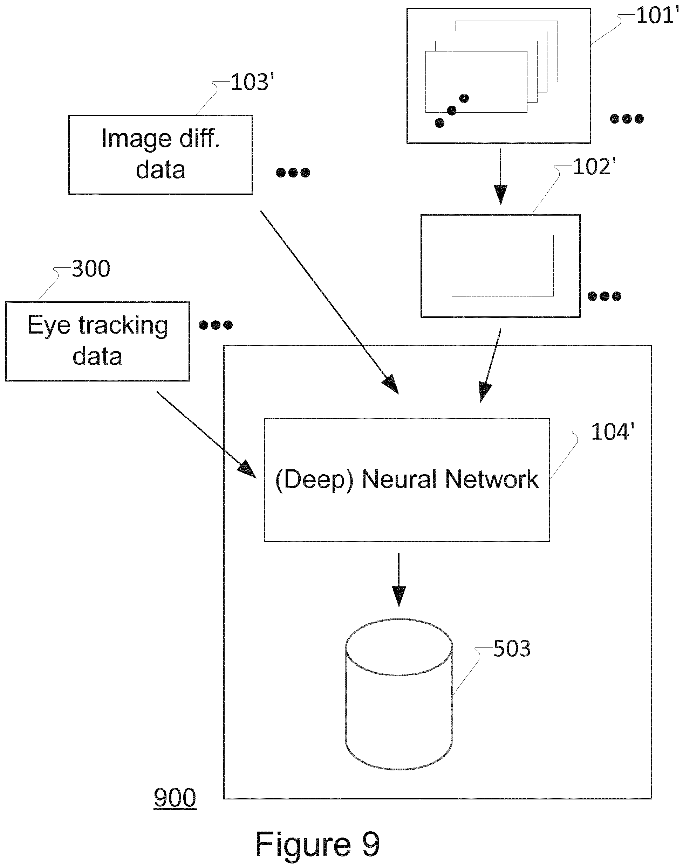

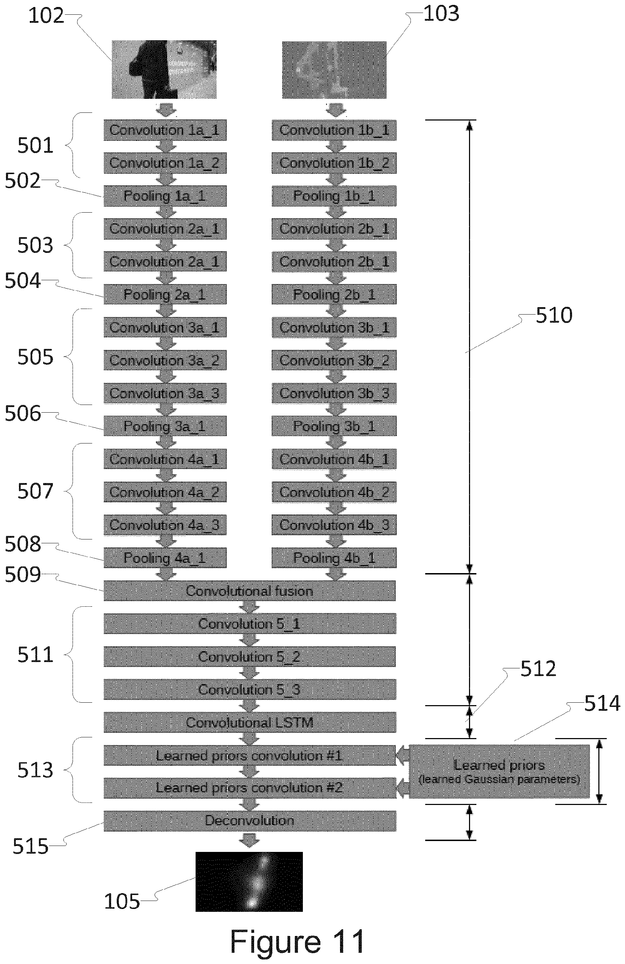

The trained artificial intelligence, etc. method or component 104 may e.g. be or comprise an artificial neural network (ANN), a deep neural network (DNN), a convolutional neural network (CNN) (see e.g. Figure 11), etc. or as otherwise disclosed herein. The method or component 104 may e.g. be trained as shown and described in connection with Figure 9. Alternatively, the trained artificial intelligence, etc. method or component 104 may e.g. be or comprise a supervised learning model e.g. a support machine (SVM) or other suitable deep learning method or component. The artificial intelligence or machine learning method or component may be supervised, semi-supervised, or unsupervised.

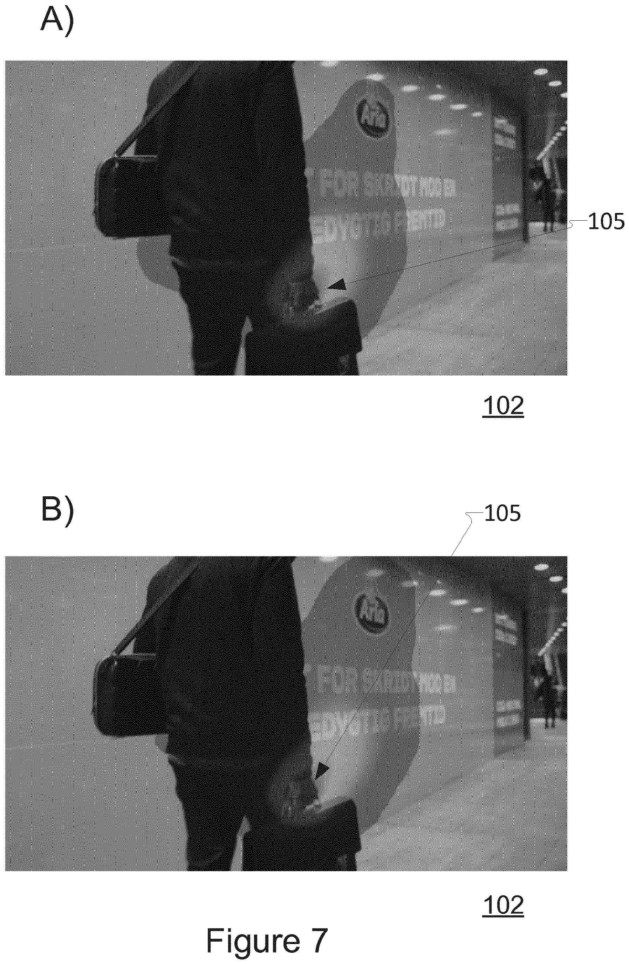

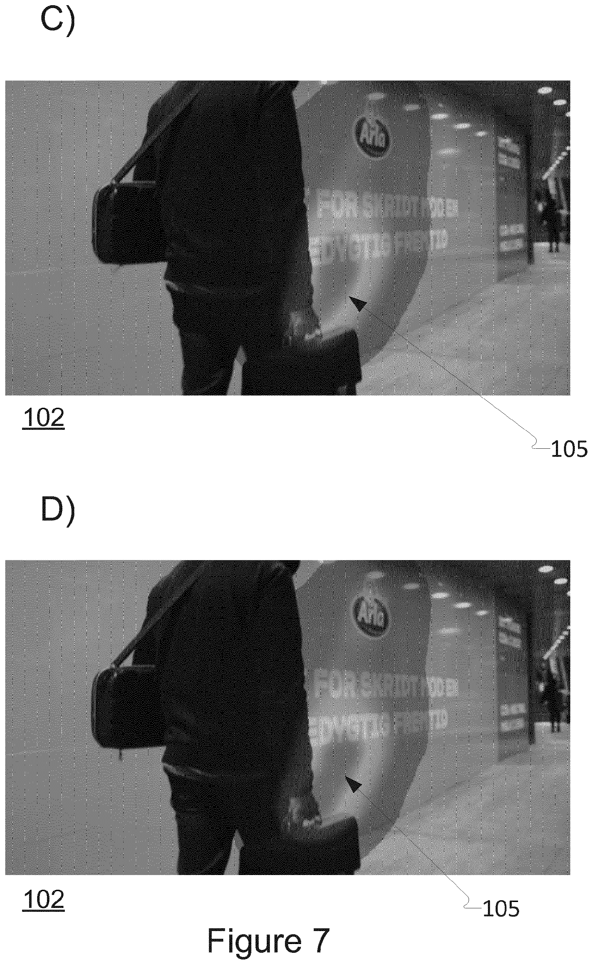

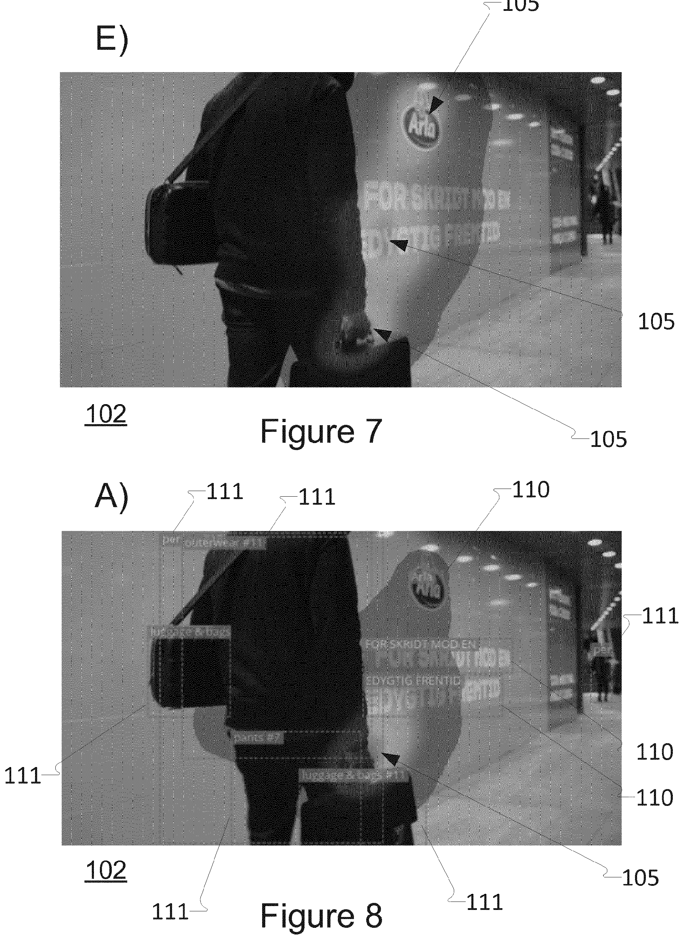

The viewing prediction data 105 shown in Figure 1 are as an example, and according to some embodiments, illustrated as predicted viewing probability heatmaps. Such predicted viewing probability heatmaps may be superimposed on the extracted frames (see e.g. Figures 7A - 7E illustrating examples of (sets of) viewing prediction data 105 visualised superimposed as contrast maps or images) and e.g. be presented to a user.

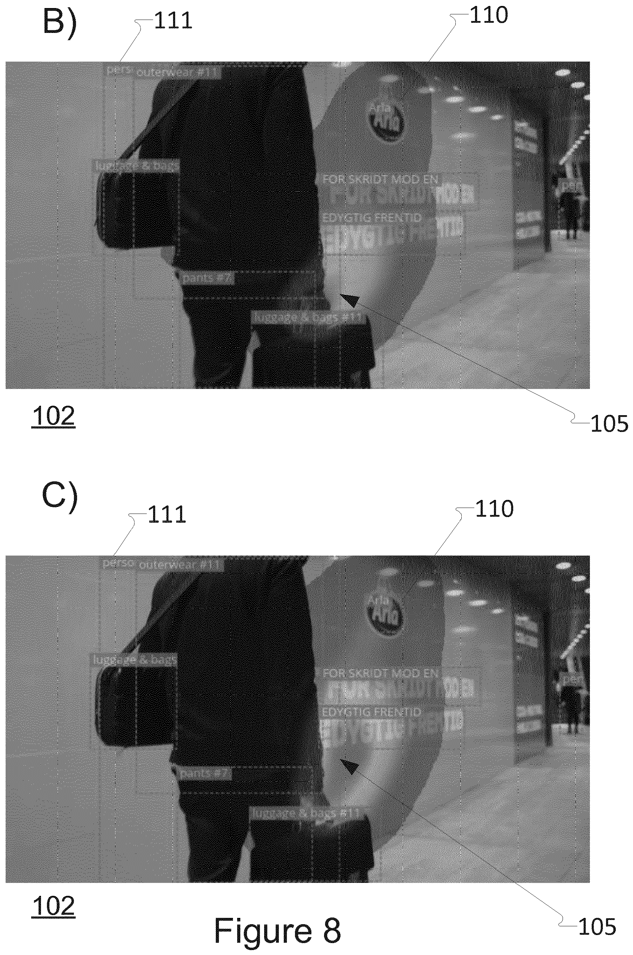

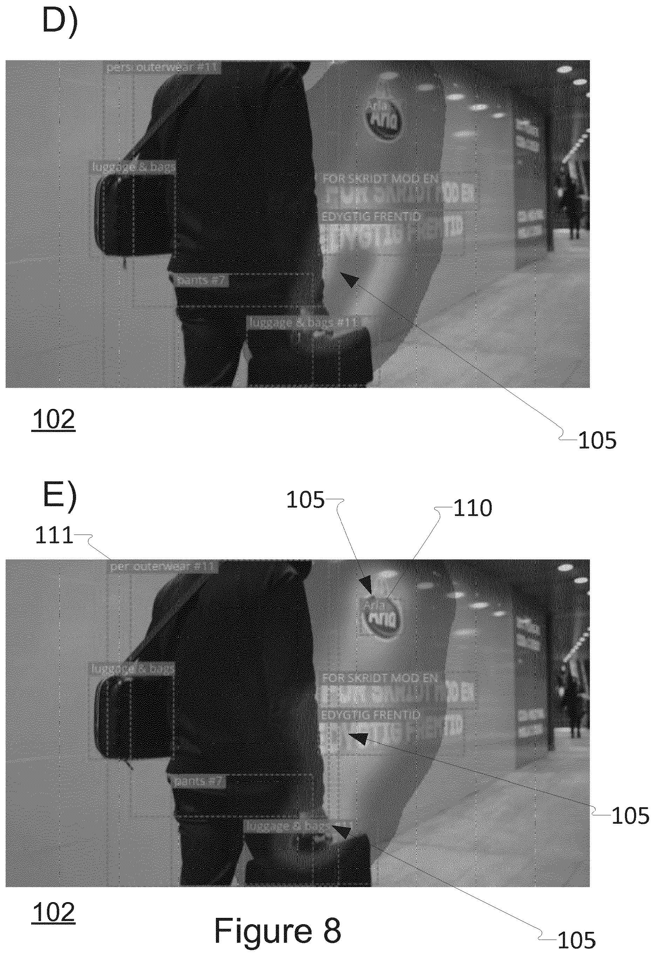

In some embodiments, object detection may optionally also be employed (see e.g. step 205 Figure 2 and 110 and 111 in Figure 8).

In some embodiments, a number of different artificial intelligence, machine learning, or similar methods or components are used, where each has been differently trained using input (in particular eye tracking data) for a selected demographic profile, i.e. one method/component is trained for a first demographic profile, another method/component is trained for a second demographic profile, etc. This enables generation of viewing prediction data according to different demographic profiles.

Figure 2 schematically illustrates exemplary embodiments of a computer-implemented video-analysis method as disclosed herein.

Illustrated in Figure 2 is a schematic flow chart of embodiments of a computer-implemented video-analysis method 200 where the computer-implemented method is or may be performed by an electronic data processing apparatus (e.g. such as the one illustrated as 100 in Figure 12) e.g. in connection with a distributed and/or cloud computing system (e.g. such as the one illustrated as 509 in Figure 12).

At step 201, the method 200 starts and potentially is initialized, etc.

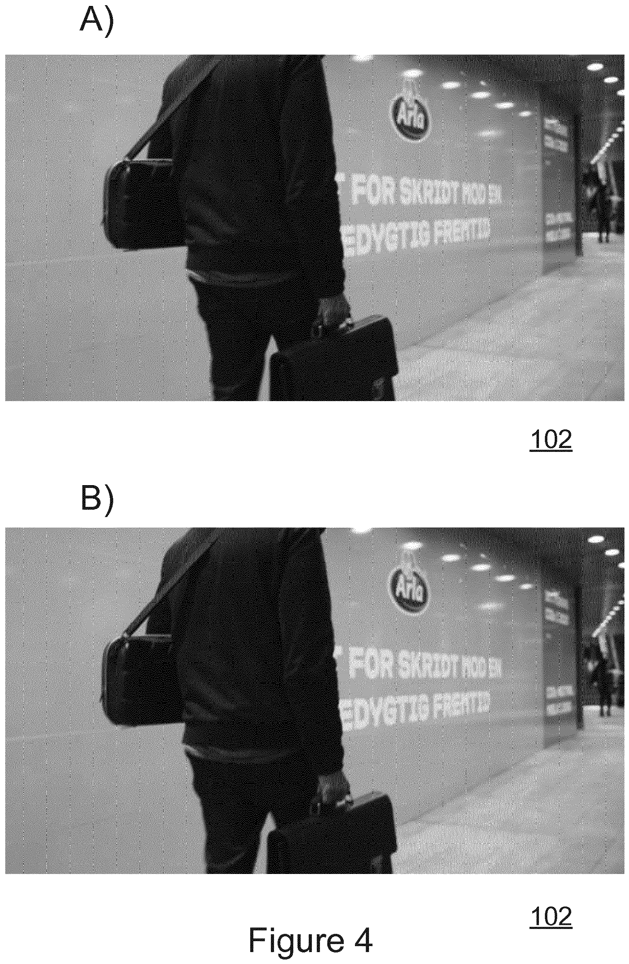

At step 202, (at least) two sets of image data of a video to be analysed (see e.g. 101 in Figure 1) is obtained or provided, e.g. or preferably as described in connection with Figure 1 or elsewhere, where each set of image data is data representing an extracted frame (see e.g. 102 in Figures 1 and 4A - 4F) of the video to be analysed. Herein, an extracted frame is also referred to as a processing frame. The two extracted frames are neighbouring frames or at least subsequent frames of the video, i.e. the two extracted frames are time-wise ordered where one extracted frame follows, in a time-wise manner, the other extracted frame when the video is otherwise played. It is noted, that the two extracted frames does not necessarily need to be directly following each other, e.g. if only every second, third, fourth (or any other suitable number) frame of the video is extracted. Figures 4A - 4F illustrate examples of consecutive/subsequent sets of image data.

As mentioned, the sets of image data may be generated on the basis of a received video file or a video stream or alternatively the sets of image data may be pregenerated and e.g. be received from another source or be pre-stored.

In some embodiments, step 202 (or another step) may also comprise conditioning or otherwise optimising the obtained sets of image data for subsequent processing by the method 200. This may e.g. involve one or more of reducing or otherwise adapting/changing the resolution (e.g. reducing the resolution of the extracted frames compared to the resolution of the video), converting or encoding the video frames into another (e.g. more processing suitable or efficient) data format, perform filtering (e.g. low-pass filtering) to remove image (e.g. compression) artefacts or other, perform quality or suitability check(s), etc. of the obtained sets of image data. In at least some embodiments, the quality or suitability check(s) may e.g. comprise detecting, in an image data set, a number of areas or regions comprising image artefacts, such as compression artefacts, that would make the video analysis incorrect or at least less reliable. If the number of areas or regions is above a predetermined threshold, then the image data set, i.e. the extracted frame, may simply be skipped or dropped from use in the video analysis. In such cases, a next or subsequent set of image data may then be obtained and used instead (e.g. keeping track of the time-wise ordering). At least some of these steps or part(s) thereof may also be performed as part of the initialising of step 201 and/or another step of the method 200.

At step 203, a set of image movement or difference data, e.g. optical flow data, (see e.g. 103 in Figure 1 and Figures 5A - 5E) is derived, e.g. or preferably as described in connection with Figure 1 or in any suitable other way, representing or estimating movement or differences between the two obtained sets of image data. In the following description of Figure 2, image movement or difference data is referred to simply as optical flow data. For example, if frameₙ and frameₙ₊₁ are obtained at step 202, flow data set flowₙ may be derived.

Instead of providing the set of optical flow data using frameₙ and frameₙ₊₁ the set of optical flow data could be derived using frameₙ₋₁ and frameₙ, which might not make a significant (depending on use) difference especially if the flow does not change dramatically from frame to frame (and in particular if all, most, or many of the overall frames of the video is extracted, i.e. not many overall frames are skipped in the extraction process).

In at least some embodiments, the set of optical flow data comprises a length data value and an angle data value (together representing a vector) for each relevant point or part (e.g. pixel, pixel-block, image portion, or image cluster). In some further embodiments, the optical flow data (length and angle) is encoded as an HSV image format with the length value being encoded as the hue value and the angle being encoded as the saturation value (where V/value is not used and e.g. set to a same consistent value for all optical flow data sets), or alternatively the other way around (angle -> H; length -> S). It is a computational advantage if the resolution of the set of optical flow data is the same as the obtained sets of image data. Accordingly, the HSV image format is, at least in some embodiments, then converted from HSV into the same image format, e.g. an RBG format, as the obtained image data sets. Figures 5A - 5E illustrate examples of (sets of) optical flow data visualised as HSV contrast maps or images.

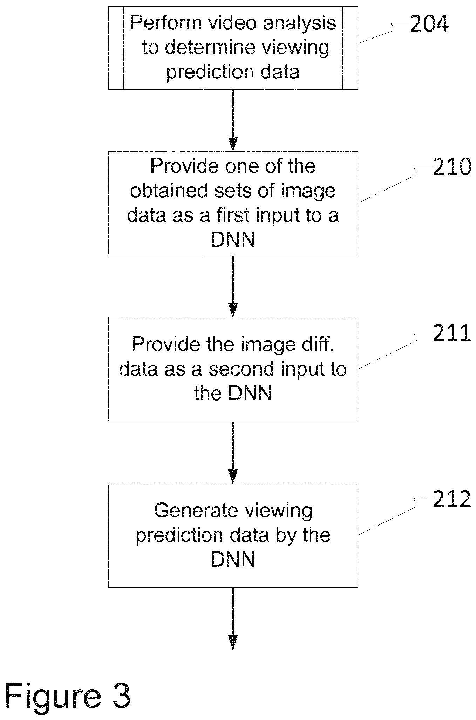

At step 204, video analysis is performed using, as input, (at least) one of the image data sets obtained or provided at step 202 and the set of optical flow data obtained or provided at step 203 where the video analysis generates a (set of) viewing prediction data (see e.g. 105 in Figures 1 and 6A - 6E) for the image data set, e.g. or preferably as explained in connection with Figure 1 and/or as disclosed herein. More particularly, the input is provided to a trained artificial intelligence, etc. method or component (see e.g. 104 in Figure 1, steps 210 and 211 in Figure 3, and Figure 11), such as an ANN, a DNN, CNN, etc. The trained artificial intelligence, etc. method or component has, e.g. or preferably, been trained as disclosed herein and e.g. or preferably as explained in connection with Figure 9.

The generated (set of) viewing prediction data for a particular set of image data/extracted frame is or comprises, at least in some embodiments, one or more statistical quantities of where users in general (at least with sufficient training of the artificial intelligence, etc. method/component) are likely or expected to look when looking at the particular extracted frame 102 and accordingly provides a prediction thereof (for many users). The generated (set of) viewing prediction data may be stored in a suitable memory and/or storage (see e.g. 503 in Figure 12) for further processing and/or use. The storage may be local and/or external. Figures 6A - 6E illustrate examples of viewing prediction data for a number of image data sets.

The one image data set to be used as input (of the two obtained at step 202) is, at least in some embodiments, the first (i.e. time-wise earliest) image data set. For example, if frameₙ and frameₙ₊₁ are obtained at step 202, then frameₙ may be used as input. Alternatively, it may be the other (of the two) image data set (e.g. frameₙ₊₁), but that would typically require a different training, at least for increased or optimal accuracy.

One particular embodiment of step 204 (and variations thereof) is illustrated and explained further in connection with Figure 3.

After step 204, the method 200 proceeds to step 207 (if no optional steps are included, as explained in the following) where it is tested whether viewing prediction data should be derived for any additional image data set(s). In case of yes, the method 200 loops back to step 202 where the next two sets of image data are obtained or provided and the method 200 performs steps 203 and 204 for the new data. This is repeated until the test of step 207 is no, in which case, the method 200 proceeds to step 209 ending the method. It is noted that generally, or at least in some embodiments, one of the image data sets (i.e. the time-wise latest) is used again but then now as the time-wise earliest one for the new iteration; i.e. for a given execution of steps 202 - 207 then frameₙ and frameₙ₊₁ is used to determine the viewing prediction data while in the next iteration of steps 202 - 207 then frameₙ₊₁ and frameₙ₊₂ is used to determine the next viewing prediction data. In this way, a 'window' steps or shifts across the frames (that are used) of the video to be analysed.

In some embodiments, the method 200 comprises one or more optional additional steps (e.g. steps 205, 206, and 207) in any combination as described in the following or as disclosed herein.

In some embodiments, the method 200 comprises an optional step 205 (shown after step 204) that performs object determination where an image data set, preferably the image data set used as input in step 204, is analysed by a suitable object detection method, e.g. as generally known, to identify one or more portions of the image data sets that each with a certain likelihood represents an object. The object detection method may potentially also determine or at least estimate what the object is. The object may be an image/picture object (e.g. a vehicle, a person, a specific animal, etc.) and/or text object (e.g. letters, words, numbers, a logo, etc.). The object detection method may e.g. involve tracking a detected object across several image data sets/frames. The object detection method may also identify and separately track different objects of the same type (e.g. different persons).

Data representing detected object(s) may e.g. be used together, e.g. as part of a step of deriving metrics or other scores (see e.g. 206 in the following), with the viewing prediction data (for the same image data set/frame) to automatically determine whether and even to what extent users (statistically as predicted or estimated) will look at the detected object(s). The object detection method may e.g. generate a bounding box, or in general any suitably shaped bounding shape, mask, or form (forth only referred to as bounding shape), in or for the image data set for each detected or determined object. In some such embodiments, the method 200 (or another method) may combine the bounding shape with the derived viewing prediction data to determine if and to what extent users likely will look at the detected object. When the viewing prediction data is an image format, e.g. an RGB grey-scale image format, it is computationally simple or at least simpler, using the derived viewing prediction data, to determine to what extent users is expected or predicted to look at a detected object e.g. by determining whether the viewing prediction data within the bounding shape is above a predetermined or set threshold or level or not. It is also possible to quantify to what extent users are (predicted or estimated) to look at the detected object and e.g. over the whole video or segments thereof.

In at least some embodiments, a user can select what specific object(s) (and e.g. specify their type) to detect or track and/or select what object(s) (e.g. via their bounding shape) viewing prediction data is to be determined for. The user may e.g. receive a generated preview of automatically detected objects or select objects by appropriately marking objects in (frames) of the video.

In some embodiments, the method 200 comprises an optional step 206 (shown as an example after step 205) that derives one or more metrics or scores for or using the determined viewing prediction data. In some embodiments, where some require step 205 or its functionality to also be performed, one or more viewing scores may e.g. be determined for a particular detected object. The scores may e.g. be one or more of: a presence metric or similar for the detected object (e.g. number of frames that the particular detected object is present in compared to the overall number of frames of the video or alternatively compared to the number of extracted frames of the video), a viewing score indicating (e.g. only by 'yes' or 'no') whether users are predicted to look at the detected object (e.g. is viewing prediction data within the boundary shape of the particular detected object above a predetermined threshold, e.g. 40%, 50%, 60%, or another suitable threshold), a more elaborate or alternative viewing score or predicted attention providing a metric representing or estimating to what extent users are predicted to look at the detected object for one or more particular frames and/or for the entire video (e.g. determining an average viewing prediction percentage for a detected object by finding the average of the viewing prediction data within the boundary shape of the particular detected object for one or more particular frames and/or for the entire video; potentially together with min/max viewing prediction percentage) and e.g. normalised by dividing with the size of the detected object/boundary shape, etc. The scores may be weighted (e.g. with respect to an importance or significance) and/or be normalised (e.g. with respect to time, number of frames, and/or size of a detected object). If multiple objects intersect or overlap in a given frame (see e.g. bounding shape for 'person#1' (the largest bounding shape to the left) and bounding shapes for 'outerwear11', 'luggage bags #11', 'pants#7', etc. in Figure 8A) then various ways may be employed to distribute the predicted attention value between detected objects. In some such embodiments, one way is to assign the predicted attention value to the detected object having the smallest boundary shape. Another way is to distribute the predicted attention value equally for the detected objects while another is to distribute the predicted attention value between the detected objects proportionally to the area of their respective bounding shape, and so on.

In some embodiments, the method 200 comprises an optional step 208 (shown as an example after the no branch of step 207) that visualises, and e.g. presents to a user, the derived viewing prediction data e.g. together with any derived metric(s) and/or score(s) in a suitable way. In some embodiments, the viewing prediction data (for each set of image data) is converted to a colour heatmap and superimposed on the set of image data that the viewing prediction data has been derived for. The resulting superimposed colour heatmap images may be converted into a video or image sequence format for visualisation and/or analysis. Figures 7A - 7E illustrate examples of viewing prediction data superimposed as a colour heatmap for a number of image data sets. If object detection is used, the boundary forms of each relevant object may also be superimposed on the resulting colour heatmap images. Figures 8A - 8E illustrate examples of this.

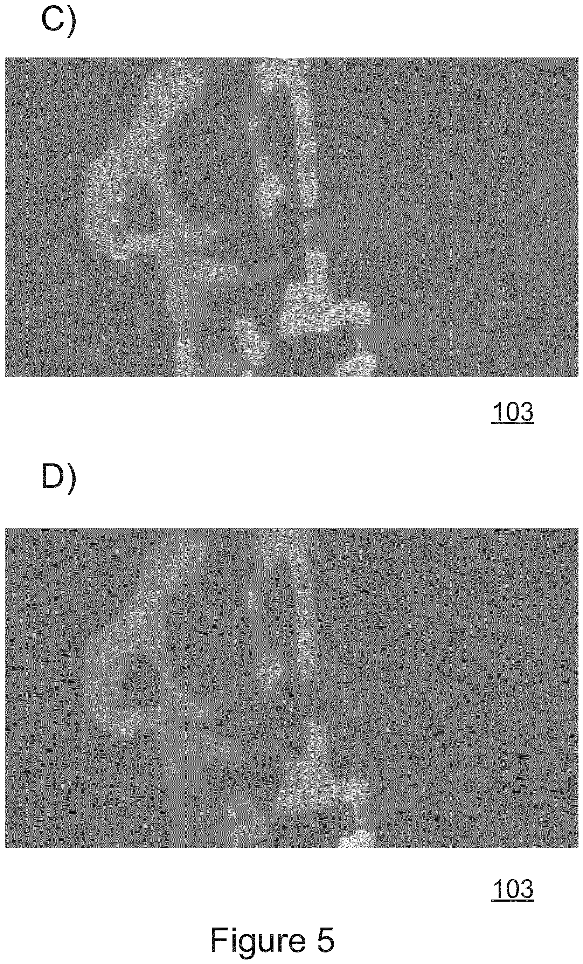

In alternative embodiments, the trained artificial intelligence, etc. method or component of step 204 is configured (and has been trained) to further receive one or more additional inputs, which at least potentially increase the accuracy and/or usability of the generated viewing prediction data. One example of such an additional input is receiving a part of the audio signal of the video to be analysed. In such cases, the method 200 could comprise, e.g. as part of step 203 or a separate/another step, obtaining or extracting an audio segment of the video in a window of vicinity of an obtained image data set (extracted frame). An obtained audio segment could for example contain an audio cue e.g. the sound of a car horn or a car engine running likely prompting user attention to focus on a car or vehicle if contained in the frames of the video. As another example, an obtained stereo or surround sound audio segment could for example also be used as an attention indicator (e.g. higher 'left' volume than 'right' volume may e.g. more likely prompt user attention to focus to the 'left' in the image/frame than to the right, higher 'middle' volume may e.g. more likely prompt user attention to focus on the 'centre' of the image/frame, etc.). This may advantageously be combined with data derived by an object determination step such as step 205. Alternatively, a frequency spectrum, or another type of audio fingerprinting, may be derived for the obtained audio segment and used as input to the trained artificial intelligence, etc. method or component to determine the viewing prediction data. In some embodiments, the frequency spectrum (or other type of audio fingerprinting) may be derived in or converted into a suitable image format (preferably having the same resolution and/or a data format as the processing/extracted frames (see e.g. 102 in Figures 1, 4, 7, and 8) and/or the image movement or difference data (see e.g. 103 in Figures 1 and 5)), which will simplify processing.

Alternatively or in addition, the trained artificial intelligence, etc. method or component is configured (and has been trained) to receive more than one set of image data and/or more than one set of optical flow data as input.

It is to be noted, that instead of looping with steps 202 - 207 then all frames (to be used) may be extracted, followed by deriving all sets (to be used) of optical flow data, and ultimately determining all sets of viewing prediction data. Steps 205 and 206 may in some embodiments be executed in parallel. Furthermore, step 206 may be executed before step 205, e.g. if no metric(s) or score(s) is to be derived involving detected objects. Additionally, object detection (step 205) may be executed in parallel with steps 203 and 204 (and 206 if included). The computation (or at least some of it) of the method 200 may also be distributed e.g. in a cloud computing system or similar.

Figure 3 schematically illustrates exemplary embodiments of determining viewing prediction data as disclosed herein, e.g. as a step of the method according to Figure 2.

Illustrated is a particular embodiment of step 204 of Figure 2.

At step 210, one of the obtained or provided image data sets (of the two obtained at step 202) is provided as first input to a trained artificial intelligence, machine learning, or similar method or component (see e.g. 104 in Figure 1), here as an example a trained DNN e.g. in the form of an CNN (see e.g. Figure 11), e.g. or preferably trained as shown and explained in connection with Figure 9. In at least some embodiments, the provided image data set is the first (i.e. time-wise earliest) image data set of the two of step 202.

In at least some embodiments, the image data set is in an RGB image format and is provided to the DNN by providing each R, G, and B value of each pixel of the image data set to one input node or similar of an input layer of the DNN. For example, if the provided image data set has a resolution of 640x480 pixels in an RGB format (using three values for each pixel), the image data set is provided to 307200 (640x480x3) input nodes or similar of the DNN e.g. ordered according to RGB values, i.e. R1, G1, B1, R2, G2, B2, etc. is received by the first six input nodes, etc. or according to any other suitable ordering (as long as it consistently is used, including in training).

At step 211, the set of optical flow data obtained or provided at step 203 is provided as second input to the DNN (or similar). In at least some embodiments, the set of optical flow data is provided in an image RGB format to the DNN by providing each R, G, and B value of each pixel of the image data (representing the optical flow data) to one input node or similar of the input layer of the DNN. For example, if the image representing the optical flow data has a resolution of 640x480 pixels in an RGB format (using three values for each pixel), the image is provided to 307200 (640x480x3) input nodes or similar of the DNN e.g. ordered according to RGB values, i.e. R1, G1, B1, R2, G2, B2, etc. is received by the first six input nodes designated for the optical flow data or according to any other suitable order (again as long as it consistently is used, including in training). The input nodes receiving optical flow data (of step 211) are different to the input nodes receiving the image data set (of step 210). Continuing the above examples (with both the image data and the optical flow data each having a resolution of 640x480 pixels in an RGB format), the DNN would comprise 614400 input nodes.

It is noted that practically steps 210 and 211 will typically be done at the same time or as one step. In some embodiments, each input is provided as part of their own processing part, path, channel, or branch (see e.g. 510 in Figure 11).

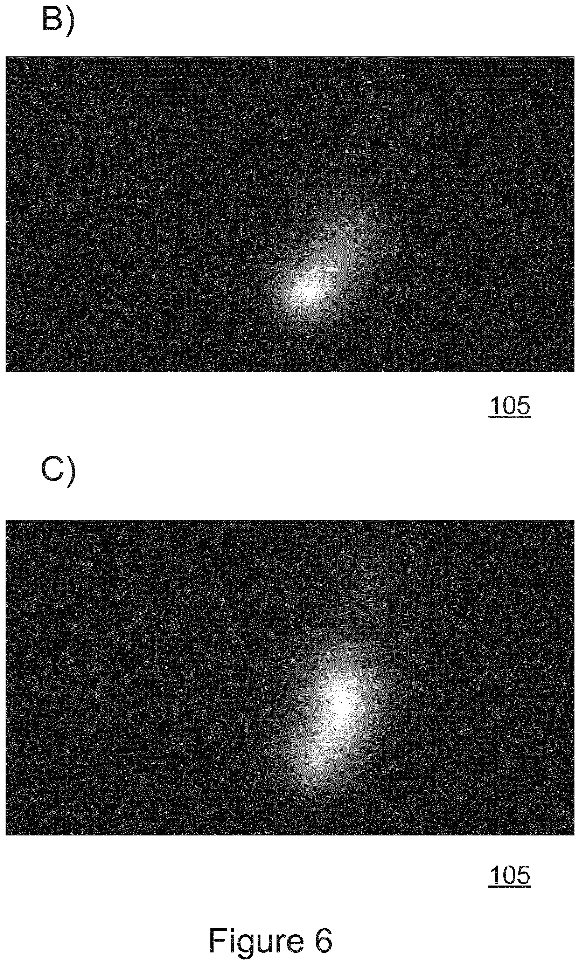

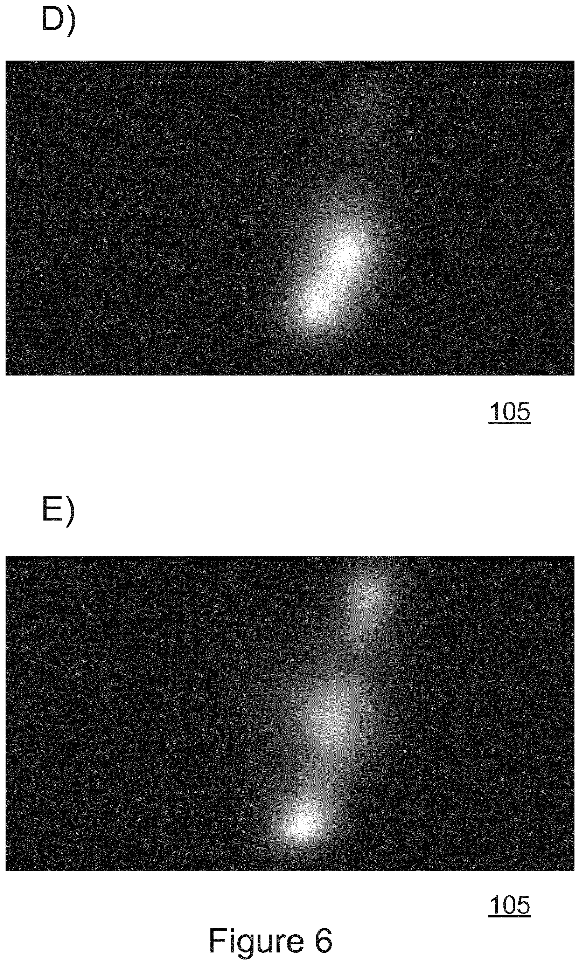

At step 212, the DNN generates the viewing prediction data using the provided first and second input and generating output according to its training. In some embodiments (with appropriate training), the viewing prediction data output by the DNN is in an image format or can readily be converted into such (see e.g. 105 in Figures 6A - 6E) where each output node of an output layer of the DNN outputs a predicted attention value according to a predetermined ordering where each predicted attention value is for a pixel of the image data set used as input at step 210. For example, if the image data set used as input at step 210 has a resolution of 640x480 pixels in an RGB format, each output node (of a total of 102400 (640x480x1) output nodes) of the DNN outputs a predicted attention value for each pixel of the input image data set. In some embodiments, the predicted attention value is a value between 0 and 255 where 0 represent a predicted attention of 0% while 255 represent a predicted attention of 100%. In such cases, the viewing prediction data may readily be represented or visualised as an image (with a resolution of 640x480 for 102400 predicted attention values) e.g. as in Figure 6. Typically the DNN comprises multiple layers (e.g. about 20 to 25 layers) between the input and output layers, involves convolution, de-convolution (e.g. for internal up-scaling in the DNN before output), etc. and derives the output as generally known for such DNNs or similar. In some embodiments, the number of layers is about 50. See e.g. Figure 11 and related description for a preferred embodiment where the DNN is a convolutional neural network (CNN).

As mentioned, it is an advantage if the formats of the data provided at steps 210 and 211 and the data being generated at step 212 are the same and in particular if they have the same resolution and e.g. are an image format.

Figures 4A - 4F schematically illustrate a number of exemplary image data sets.

Illustrated are six exemplary image data sets 102 extracted as processing frames from a video showing a person walking down a hallway carrying two bags. Each processing frame 102 also comprises a logo and text written on a wall and additional persons (to the right).

Figures 5A - 5E schematically illustrate exemplary image movement or difference data, here in the form of optical flow data, obtained from or for the image data sets of Figures 4A - 4F.

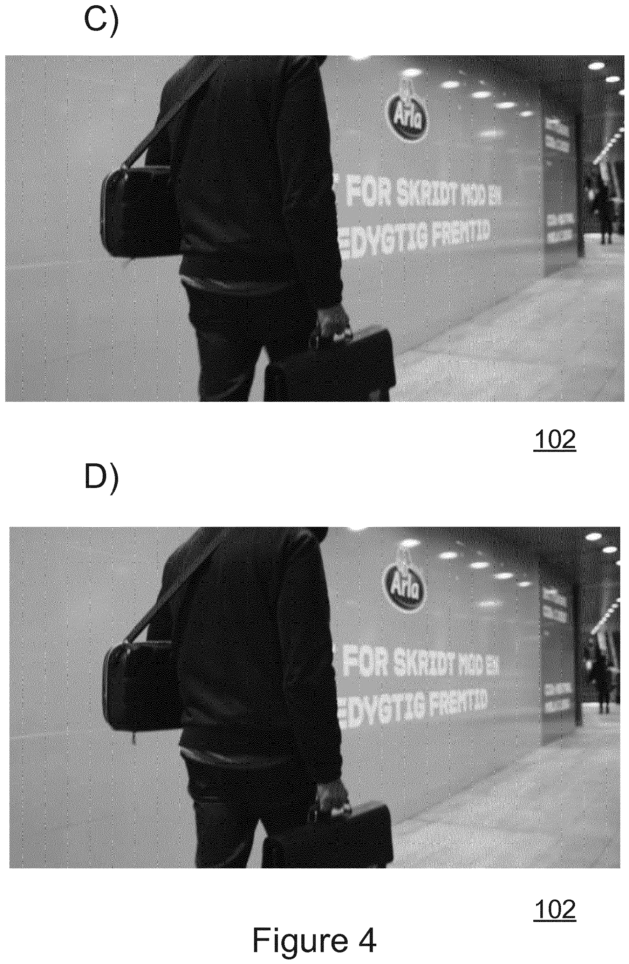

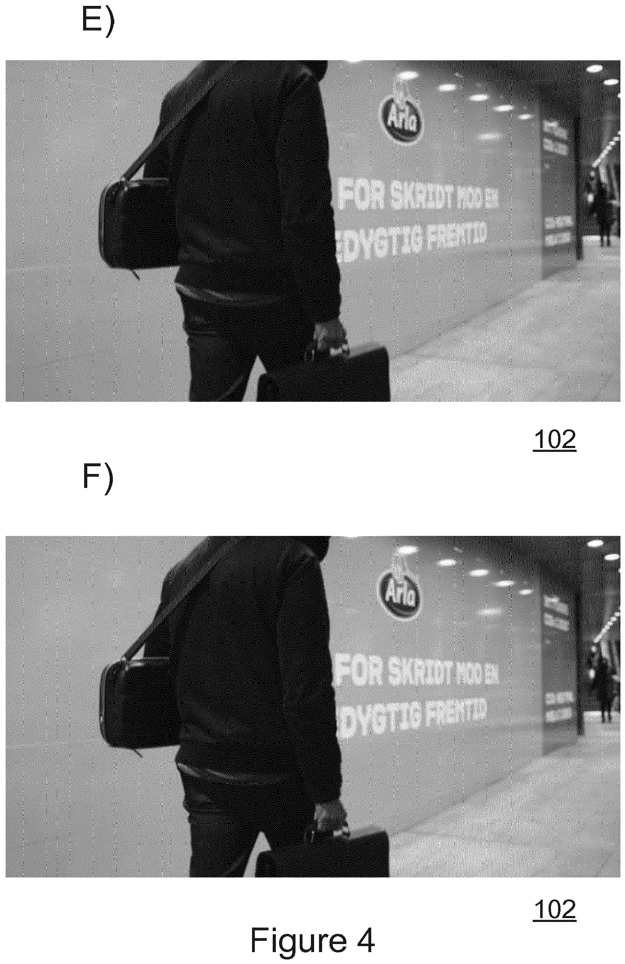

Illustrated are five sets of image movement or difference data 103 in the form of optical flow data that has been obtained from the image data sets of Figures 4A - 4F as described in connection with step 203 of Figure 2, i.e. the optical flow data 103 of Figure 5A is obtained on the basis of the image data sets 102 of Figures 4A and 4B, Figure 5B is obtained on the basis of Figures 4B and 4C, etc. and finally Figure 5E is obtained on the basis of Figures 4E and 4F. The optical flow data sets 103 of Figures 5A - E are visualised as an RGB image having been converted from an HSV image encoded by optical flow data (length and angle) for each respective 'pixel' value of the image.

Figures 6A - 6E schematically illustrate generated viewing prediction data derived using, as input, the image data sets and the flow data of Figures 4 and 5, respectively.

Illustrated are generated viewing prediction data 105 generated as explained in connection with Figures 2 and 3 and using the image data sets of Figure 4 and the flow data of Figure 5 as input. The viewing prediction data 105 of Figure 6A is generated for the image data set of Figure 4A using the image data set of Figure 4A and the optical flow data set of Figure 5A as input, the viewing prediction data 105 of Figure 6B is for the image data set of Figure 4B using the image data set of Figure 4B and the optical flow data set of Figure 5B as input, etc. and finally the viewing prediction data 105 of Figure 6E is for the image data set of Figure 4E using the image data set of Figure 4E and the optical flow data set of Figure 5E as input.

The viewing prediction data 105 of each figure is visualised as a grey-scale image using 256 values to represent (the blackest) black representing the lowest used likelihood (in the present example 0%) to (the whitest) white representing the highest used likelihood (in the present example 100%). The viewing prediction data 105 of each image is the output generated by step 212 of Figure 3.

Figures 7A - 7E schematically illustrate exemplary image data sets with a visualisation of generated viewing prediction data superimposed thereupon.

In Figures 7A - 7E the viewing prediction data 105 of Figures 6A - 6E has been converted into a colour heatmap and respectively been superimposed on the image data sets/the extracted frames 102 that the viewing prediction data 105 was determined for. In Figure 7A it can for example be seen that the computer-implemented video analysis method as disclosed herein generates viewing prediction data 105 that estimates that many/most users will look at the hand of the most prominent person in the image but also that some users (but not as many) is estimated to look at the text and also the logo on the wall. As can be seen from Figures 7B to 7E the area with most predicted attention shifts towards the text on the wall (while still being held at the hand of the person) until it finally splits into the hand, the text on the wall, and the logo.

Figures 8A - 8E schematically illustrate exemplary image data sets with a visualisation of generated viewing prediction data and object recognition data superimposed thereupon.

Illustrated are images corresponding to Figures 7A - 7E but now with visualised object recognition data as determined by step 205 of Figure 2. The object recognition data is visualised by a bounding shape (here as a simple example as a bounding box) for each detected object. As mentioned, it is possible to determine what object (including text) that is predicted to be seen by a group of users and furthermore automatically derive metrics as disclosed herein.

Figure 9 schematically illustrates exemplary embodiments of training a method or component of a video analysis method as disclosed herein.

Illustrated is an electronic data processing device or system 900 configured to train an artificial intelligence, machine learning, or similar method or component to be trained 104', e.g. an artificial neural network (ANN), a deep neural network (DNN), a convolutional neural network (CNN), etc.

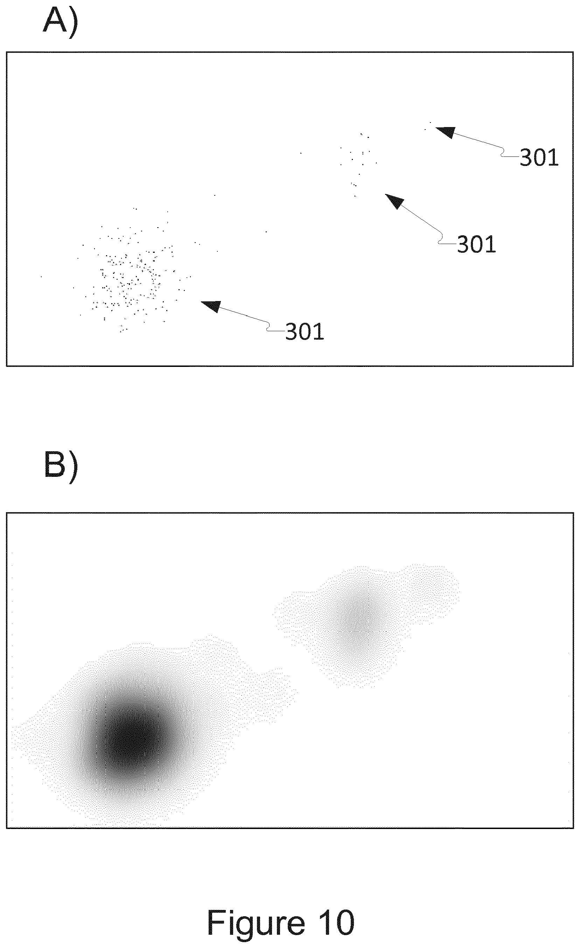

Further illustrated are data representing a number of input or training videos 101', data representing a number/a plurality of input images or frames 102' extracted from an input or training video, data representing a number of input or training image movement or difference data sets 103' (e.g. optical flow data sets), and data representing a number of input or training eye tracking data sets 300. Each used set of image movement or difference data 103' is associated with one (or more) of at least two neighbouring or consecutive images/frames 102' or a video 101'. Each used set of eye tracking data 300 is associated with (i.e. determined for or estimating) a specific one of the videos 101' or the images/frames 102' and is typically obtained for a single user. Different sets of eye tracking data 300 may be obtained and used even for different users viewing the same image/frame or video. It is noted, that the input or training eye tracking data 300 even for an image or frame 102' may be eye tracking data measured over time, i.e. by registering how a user is looking at the image or frame 102' (for some amount of time). The eye tracking data 300 may be obtained by a suitable type of eye-tracking device as generally known and may e.g. be converted into a suitable data format before being used for training (Figure 10 further illustrates and explains an embodiment of this).

The artificial intelligence, etc. method or component to be trained 104' is preferably trained using an image/frame 102' or a video 101' and an associated image movement or difference data set 103' as input and eye tracking data 300 (associated with the used image/frame) as a ground truth or similar. In at least some embodiments, input or training videos 101' are split up into frames or images, e.g. as disclosed herein, whereby only images are used (instead of using images and videos) as training input to the method or component to be trained 104'. The input or training image movement or difference data sets 103' is either provided or generated e.g. generated from neighbouring or at least subsequent frames of the video e.g. as disclosed herein. In at least some embodiments, the image movement or difference data sets 103' is input as images simplifying the training and the associated computational effort. The image movement or difference data sets 103' can be provided in this format or be converted into it. In some embodiments, the image movement or difference data sets 103' (comprising a length and an angle for each data point) is encoded as an HSV image format and converted from HSV into a suitable RGB format preferably corresponding to the RGB format of the still images 102' and the extracted frames (extracted from a video 101').

In some alternative examples, the method or component to be trained 104' is trained without using input or training image movement or difference data sets 103'. This may still produce a usable artificial intelligence, etc. method or component, at least for certain uses, however it has been seen that including image movement or difference data sets 103' greatly increases the accuracy, robustness, and/or reliability of the derived viewing prediction data.

If the formats of the input or training images/extracted frames 102' of the videos 101', the eye tracking data sets 300, and the image movement or difference data sets 103' are the same then mixed types of inputs for the training are avoided. In at least some embodiments, the format or formats of the images/extracted frames 102' of the videos 101', the eye tracking data sets 300, and the image movement or difference data sets 103' is or are the same as (or at least consistent or compatible with) the formats that are used by the computer-implemented video-analysis method as disclosed herein (see e.g. 200 in Figure 2).

In some further embodiments, the artificial intelligence, machine learning, or similar method or component to be trained 104' is configured to be trained also using obtained or extracted audio segments of a video 102' e.g. in a window of vicinity of an extracted frame. This enables use of audio when determining viewing prediction data as disclosed herein. An obtained audio segment could for example contain an audio cue likely prompting user attention to focus on an object associated with the audio cue. As another example, an obtained stereo or surround sound audio segment could for example also be used as an attention indicator (e.g. higher 'left' volume than 'right' volume may e.g. more likely prompt user attention to focus to the 'left' in the image/frame than to the right, higher 'middle' volume may e.g. more likely prompt user attention to focus on the 'centre' of the image/frame, etc.). As mentioned, this may advantageously be combined with data derived by an object determination step. Alternatively, a frequency spectrum, or another type of audio fingerprinting, may be derived for the obtained audio segment and used, e.g. also in an image format, as training input to the artificial intelligence, etc. method or component.

In some embodiments, data representing demographic information or profile (such as gender, age, etc.) for the users that the eye tracking data 300 has been generated or obtained for is obtained and associated with the images 102' and/or the videos 101'. This enables training using the demographic information or profile in addition. Alternatively, a number of different artificial intelligence, machine learning, or similar methods or components to be trained 104' are used, where each has been differently trained using input (in particular eye tracking data 300) for a selected demographic profile, i.e. one method/component 104' is trained for a first demographic profile, another method/component 104' is trained for a second demographic profile, etc.

This enables the use of demographic information or profiles when deriving viewing prediction data.

Figure 10 schematically illustrates an obtained exemplary set of eye tracking data and the result of processing it for use in training according to an exemplary embodiment.

Shown in Figure 10A are eye tracking data points 301 obtained by a suitable eye tracking device or system, as generally known. In this particular example, each data point (pixel in this case) is where a user has been registered to actually look for a particular input image, i.e. one point represent where a single user has looked at the input image. In other embodiments, two or more points are obtained for a user e.g. obtained over time and/or obtained for multiple sessions. In further embodiments, all points are obtained for a single user looking at the input image.

Shown in Figure 10B are the eye tracking data points 301 converted into a density map or similar here as an example in a suitable image format. For the converted density map or similar, the colour scale or range represent a likelihood (e.g. between 0 to 100%) of user(s) viewing a particular point. The image format may e.g. be a grey-scale image format where (the blackest) black represent the lowest used likelihood (e.g. or often 0%) and (the whitest) white represent the highest used likelihood (e.g. or often 100%). In some embodiments, the resolution and the image format of the density map is the same as the resolution and image format of the generated viewing prediction data (see e.g. 105 in Figure 6). In at least some embodiments, a multidimensional Gaussian filter is used to convert the data of Figure 10A to the data of Figure 10B.

As mentioned in connection with Figure 9, such density maps may be used in the training of an artificial intelligence, machine learning, or similar method or component to be trained (see e.g. 104' in Figure 9).

As a note, the colour of the images of Figure 10 has been inverted from their exemplary used colour scheme for reproduction purposes.

Figure 11 schematically illustrates a simplified flow chart of an embodiment of a computer program or routine implementing a trained artificial intelligence or machine learning method or component as disclosed herein.

Shown is a preferred embodiment implementing the trained artificial intelligence or machine learning method or component as deep neural network (DNN) and more particularly as a convolutional neural network specifically, as an example, in the form of a VGG-16 (Visual Geometry Group) network, where 16 designates the number of layers. Such VGG networks are generally well known and another often used version is e.g. VGG-19. Illustrated are two inputs in the form of an extracted processing frame/obtained set of image data 102 and a set of image movement or difference data 103. As can be seen each input is initially processed separately as part of their own processing part, path, channel, or branch 510.

Each input is processed by a first series of feature extraction steps or convolution steps 501 (here two steps as an example) where relevant features are extracted (according to the training of the network and being different for each channel 510) e.g. as a set of feature maps. Depending on implementation, it is set how many trainable so-called kernels or filters the steps are using. In some embodiments, the first convolution step (1a_1) of the first series is set to work with 64 kernels e.g. of size 3x3 and e.g. using an activation function such as ReLU (Rectified Linear Unit) and outputs 64 feature maps used as input to the second convolution step (1a_2) in turn processing these.

After the first series of feature extraction steps 501, a (max) first pooling step 502 essentially functioning as a noise filter so smaller/insignificant variations in the obtained feature maps does not influence subsequent processing (or at least influence it less).

The process continues with carrying out a second series of feature extraction or convolution steps 503 (again two steps as an example), a (max) second pooling step 504, a third series of feature extraction or convolution steps 505 (three steps as an example), a (max) third pooling step 506, a fourth series of feature extraction or convolution steps 507 (three steps as an example), and finally a (max) fourth pooling step 508,

The method then proceeds to merging, fusing, or combining the resulting outputs (i.e. feature maps) from each processing channel 510 followed by a fifth series of feature extraction or convolution steps 511 (here three steps as an example) extracting features of the combined features maps.

In some embodiments, and as shown, an artificial recurrent neural network (RNN), such as a Long short-term memory (LSTM) network, is used at step 512 to selectively enhance certain features (as learned during training), increasing the quality of the overall output.

In some embodiments, and as shown, a number of steps 513 (here two steps as an example) are then executed to extract, emphasize, or determine selected features according to a human perception model implemented, as an example, as a so-called 'Learned Prior' function e.g. using a set Gaussian functions with learned (during training) Gaussian parameters 514 as input.

Finally, deconvolution step 515 shapes the output for suitable use and e.g. upscales the output, i.e. the generated user viewing prediction data 105, to a used or desired resolution, e.g. 640x480 pixels.

The extracted features of the feature maps at the first steps may e.g. comprise one or more 'low level' features such as one or more of: edges, contrast, colour, lighting, simple shapes, etc. and at the later steps gradually describes the two inputs and their combination at higher/more complex levels for the convolutional LSTM block (step 512) to process.

As noted, the flow chart of Figure 11 is simplified and e.g. does not show 'normal' steps like merge and 'lambdas' (transfer).

Such convolutional neural networks (e.g. VGG) is well known as such and are e.g. described in this online article https://towardsdatascience.com/applied-deep-learning-part-4-convolutional-neural-networks-584bc134c1e2 incorporated herein by reference.

Figure 12 schematically illustrates a functional block diagram of embodiments of an electronic data processing device or system configured to output or generate viewing prediction data and/or implementing various embodiments of the methods as disclosed herein.

Shown is an electronic data processing apparatus 100 comprising one or more processing units 502 connected via one or more communications and/or data buses 501 to an electronic memory and/or electronic storage 503, and one or more signal transmitter and receiver communications elements 504 (e.g. one or more of cellular, Bluetooth, WiFi, etc.) for communicating via a computer network, the Internet, and/or the like. In at least some embodiments, the electronic data processing apparatus 100 is configured to communicate with a cloud computing system 509 that may (or may not) be a distributed system. The one or more processing units 502 may e.g. include one or more CPUs, TPUs (tensor processing units), FPUs (floating point units), GPUs (graphics processing units), and/or the like.

The electronic data processing apparatus 100 may also comprise an optional display 508 and/or one or more optional user interface elements 507.

The electronic data processing apparatus 100 can e.g. be one or more programmed computational devices, e.g. like a PC, laptop, computer, client, server, smart-phone, tablet, etc. and is specially programmed to carry out or execute the computer-implemented method(s) and embodiments thereof as described throughout the specification and variations thereof.

The electronic data processing apparatus 100 may also be used to train one or more artificial intelligence, machine learning, or similar methods or components to be trained (see e.g. 104' in Figure 9) as disclosed herein.

Some preferred embodiments have been shown in the foregoing, but it should be stressed that the invention is not limited to these but may be embodied in other ways within the subject matter defined in the following claims.

It should be emphasized that the term "comprises/comprising" when used in this specification is taken to specify the presence of stated features, elements, steps or components but does not preclude the presence or addition of one or more other features, elements, steps, components or groups thereof.

In the claims enumerating several features, some or all of these features may be embodied by one and the same element, component or item. The mere fact that certain measures are recited in mutually different dependent claims or described in different embodiments does not indicate that a combination of these measures cannot be used to advantage.

In the claims, any reference signs placed between parentheses shall not be constructed as limiting the claim. The word "comprising" does not exclude the presence of elements or steps other than those listed in a claim. The word "a" or "an" preceding an element does not exclude the presence of a plurality of such elements.

The mere fact that certain measures are recited in mutually different dependent claims does not indicate that a combination of these measures cannot be used to an advantage.

It will be apparent to a person skilled in the art that the various embodiments of the invention as disclosed and/or elements thereof can be combined without departing from the scope of the invention as defined in the claims.

## Claims

1. A computer-implemented method (200) performing video-analysis to generate user viewing prediction data (105) for a predetermined video (101), where the method comprises the steps of:
- obtaining a set of image data (102) for each of a plurality of frames (102) of the predetermined video (101),
- obtaining image movement or difference data (103), e.g. optical flow data (103), between consecutive or subsequent sets of image data (102) of the predetermined video (101),
- generating viewing prediction data (105) for at least one set of obtained image data (102), the viewing prediction data (105) of a particular set of image data (102) representing an estimated likelihood, for a number of points or a number of parts of the particular set of image data (105), of users viewing a respective point or part,
where the step of generating viewing prediction data (105) for a particular set of image data (102) comprises
- providing the particular set of image data (102) and image movement or difference data (103) associated with the particular set of image data (102) to a computer program or routine implementing a trained artificial intelligence or machine learning method or component (104) to generate or output the viewing prediction data (105), wherein the computer program or routine implementing the trained artificial intelligence or machine learning method or component (104) has been trained by
- a plurality of input images (102') extracted from a plurality of input videos (101'),
- a plurality of input image movement or difference data sets (103'), each obtained for at least two consecutive or subsequent input images (102') of the plurality of input images (102'), and
- a plurality of sets of eye-tracking data (300), each associated with one of the plurality of input images (102').

2. The method according to claim 1, wherein a resolution of the sets of image data (102) is smaller than a resolution of the frames of the predetermined video (102).

3. The method according to claim 1 or 2, wherein the image movement or difference data (103) is optical flow data (103).

4. The method according to any one of claims 1 - 3, wherein the image movement or difference data (103) is derived by encoding a length value and an angle value for at least some points or parts of a set of image data (102) as image data according to a predetermined image format.

5. The method according to any one of claims 1 - 4, wherein the image movement or difference data (103) is obtained in, converted into, or encoded in a predetermined image format.

6. The method according to any one of claims 1 - 5, wherein a resolution and/or a data format of the sets of image data (102) is the same, respectively, as a resolution and/or a data format of the sets of image movement or difference data (103).

7. The method according to any one of claims 1 - 6, wherein only a portion of a number of frames of the predetermined video (101) is extracted as a respective set of image data (102).

8. The method according to any one of claims 1 - 7, wherein the method further comprises a step of:
- performing computer-implemented object detection for the particular set of image data (102) to identify at least one portion of the particular image data set (102) where each portion with a certain predetermined likelihood comprises or represents an object.

9. The method according to claim 8, wherein the method further comprises a step of:
- determining whether generated viewing prediction data (105) within a bounding shape of a detected object is above a predetermined threshold or level or not, and deriving a metric in response thereto.

10. The method according to any claim 8 or 9, wherein the method further comprises one or more of:
- deriving a metric representing a predicted attention for a detected object for a set of image data (102) or each set of image data (102) of the predetermined video (101),
- deriving a presence metric for a particular detected object representing the time or number of frames that the particular detected object is present in compared to the overall time or number of frames of the predetermined video (101), and
- deriving a viewing or attention score or metric for a particular detected object representing or estimating to what extent users are predicted to look at the detected object, using the generated viewing prediction data (105), for one or more particular sets of image data (102) and/or for the predetermined video (101).

11. The method according to any one of claims 1 - 10, wherein the method further comprises a step of:
- converting the generated viewing prediction data (105) into a heatmap image format, e.g. a colour heatmap image format, and superimposing the heatmap image format with the particular set of image data (102) that the viewing prediction data (105) was generated for.

12. The method according to any one of claims 1 - 11, wherein the computer program or routine implementing the trained artificial intelligence or machine learning method or component (104) has been further trained by audio segments, or data derived therefrom, respectively associated with the input images (102') and/or the input videos (101'), and
wherein the step of providing the particular set of image data (102) and image movement or difference (103) to a computer program or routine implementing the trained (104) further comprises providing an audio segment, or data derived therefrom, being associated with the particular set of image data (102).

13. The method according to claim 12, wherein the data derived therefrom comprises a frequency spectrum and/or another type of audio fingerprinting, e.g. in an image format.

14. The method according to any one of claims 1 - 13, wherein the artificial intelligence or machine learning method or component (104) is or comprises an artificial neural network (ANN) or a deep neural network (DNN).

15. The method according to any one of claims 1 - 14, wherein the artificial intelligence or machine learning method or component (104) is or comprises a convolutional neural network, e.g. VGG 16 or VGG 19.

16. The method according to any one of claims 1 - 15, wherein the step of generating viewing prediction data (105) for a particular set of image data (102) comprises
- providing the particular set of image data (102) to a first processing channel or branch (510) of the computer program or routine implementing a trained artificial intelligence or machine learning method or component (104),
- providing the image movement or difference data (103) associated with the particular set of image data (102) to a second processing channel or branch (510) of the computer program or routine implementing a trained artificial intelligence or machine learning method or component (104), and
- extracting image features separately in the first and the second processing channel or branch (510).

17. An electronic data processing system (100), comprising:
one or more processing units (502) connected to an electronic memory (503), and
one or more signal transmitter and receiver communications elements (504) for communicating via a computer network,
wherein the one or more processing units (502) are programmed and configured to execute the computer-implemented method (200) according to any one of claims 1 - 16.
